Europäisches Patentamt

European Patent Office

Office européen des brevets

(11) Publication number: **0 276 050**
**A1**

## (12) EUROPEAN PATENT APPLICATION

(21) Application number: 88300063.0

(22) Date of filing: 06.01.88

(51) Int. Cl.⁴: **C 11 D 3/24**
**B 01 D 19/04**

(30) Priority: 09.01.87 EP 87400035

(43) Date of publication of application: .
27.07.88 Bulletin 88/30

(84) Designated Contracting States:
BE DE ES FR GB IT NL SE

(71) Applicant: ICI France SA
9 Clamart 1 Avenue Newton
Paris (FR)

(72) Inventor: PERSON Lucien
21 Rue Roger Campastre
92600 ASNIERES (FR)

MOURRUT Bernard
32 Rue Henri Pauquet
60100 CREIL (FR)

(74) Representative: Locke, Timothy John et al
Imperial Chemical Industries PLC Legal Department:
Patents Bessemer Road PO Box 6
Welwyn Garden City Hertfordshire, AL7 1HD (GB)

(54) Surfactant compositions, washing and defoaming processes.

(57) Compounds of formula $R(OC_2H_4)_m O C_n H_{2n} X$ in which R
is an alkyl group having 7 to 20 carbon atoms, m is 8 to 50, n is 3
to 8 and X is Br or preferably Cl are used as foam reducing
agents, textile wetting agents or low foaming washing acids in
aqueous solutions.

EP 0 276 050 A1

## Description

### Surfactant Compositions, Washing and Defoaming Processes

This invention relates to surfactant compositions and washing and defoaming processes.

Surface active agents are commonly used to reduce the surface tension of water when articles are washed. They are particularly desirable where greasy matter is to be removed from fabrics or solid surfaces. It is also found that in certain cleaning processes especially where there is considerable agitation that there is a need to suppress the formation of foam, and the same problem may arise in certain industrial processes in which water is present, for example, fermentation processes of which the production of yeast is historically important. It is often desirable to use surface active agents in such aqueous media to suppress foam.

In general surface active agents should be sufficiently biodegradable not to build up in the environment to an undesirable extent, and because in many cleaning and industrial processes alkaline conditions may be encountered it is also desirable that they should be stable to alkalis.

We have discovered a group of materials which possess a very attractive combination of such properties. Some of them are embraced within the generic formula given in the abstract of Japanese patent application specification No 60/161,938 given under accession number 85/246162 in Derwent Publications Ltd's patent abstracts, which relates to a group of compounds described as intermediates for reacting with amide compounds or amines or -OH group substituted compounds. In this invention however they are used as such as described below.

This invention comprises the use of a surface active compound of formula

$$R(OC_2H_4)_m \, O \, C_nH_{2n} \, X$$

in which R is an alkyl group having 7 to 20 and preferably 9 to 15 carbon atoms, m is 8 to 50 and preferably 9 to 20 and the group of formula $C_nH_{2n}$ may be for example $(CH_2)_n$, n is 3 to 8 and preferably 4 to 6 and in which X is a Br or preferably Cl atom as a foam reducing agent, textile wetting agent or low foaming washing aid in an aqueous solution.

The compounds are particularly suitable as defoamers in dish washing processes (where alkaline conditions usually apply) and in hard surface degreasing, for example metal degreasing. By dish washing we include the washing of pottery and glass utensils for example cups, plates, drinking glasses and the like.

The invention also comprises compositions which comprise water and 0.001 to 5% and preferably 0.01 to 3% by weight based on the water of a compound as defined above. Such compositions include low foaming media suitable for carrying out industrial processes and media suitable for washing purposes.

The invention also comprises compositions for cleaning which comprise a surface active compound as defined above together with an alkali and/or a builder.

The alkali may be sodium or potassium hydroxide or carbonate. It is perferably in a ratio of 5 to 50 and preferably 20 to 40 parts by weight per part by weight of the said compound.

The builder is suitably for example a condensed phosphate, for example sodium tripolyphosphate, a zeolite or nitrilo triacetic acid. The builder may be present in a ratio of 5 to 50 and preferably 20 to 40 parts by weight per part by weight of the said compound.

Anti corrosion agents for example alkali metal silicates may also be present for example in a weight ratio of 1:1 to 1:5 of anti corrosion agent to alkali. Bleaches may also be present for example in an amount of 10 to 100% by weight based on the said surface active compound. Complexing agent for example glucuronic acid may also be present.

The invention also comprises a process of cleaning a solid object by contacting it with an aqueous solution of a composition comprising a surface active compound as described above, for example at a concentration of the surface active agent of 10 to 10,000 parts per million (ppm) and preferably 1000 to 5000 ppm. Cleaning may be carried out at a temperature of for example 30 to 100°C and is suitably carried out by agitating the soiled object in the solution or flowing the solution over it.

The invention also comprises removing soil from hard surfaces, for example removing grease from metal objects or food residues from domestic pottery by flowing aqueous solutions of the above compositions preferably at temperatures of 50 to 90°C over the surface.

### Examples

A series of compounds of general formula $R(OC_2H_4)_mOC_nH_{2n}X$ were made up as follows.

A compound of formula $R(OC_2H_4)_mOH$ (0.193 molar proportions) was heated at 60°C for 5 hours with stirring with a compound of formula $C_nH_{2n}X_2$ (1 molar proportion) and NaOH (1 molar proportion as tablets). Water (5.55 molar proportions) was then added with stirring, and then the organic layer was separated and washed again. Water and excess $C_nH_{2n}X_2$ were removed under vacuum.

The test results are shown in the following table.

iBu Cl means 1-3 dichlorobutane
Bu Cl means 1,4-dichlorobutane

Table

| $C_nH_{2n+1}(OC_2H_4)_mOH$ | | $AX_2$ | Cloud point (°C) of Surfactant | | Antifoam Efficiences or Efficiencies % | | | | | | Biodegradability according to NFT 73270[I] |
|---|---|---|---|---|---|---|---|---|---|---|---|
| | | | | | Domestic Dishwashing | | | Commercial Dishwashing | Synthetic Sugar Beet Juice | | |
| n = | m = | | 1% solution in $H_2O$ | 2% solution in $n\text{-}C_4H_9(OC_2H_4)_2OH$ (25%)/water (75%) | 50 ppm | 100 ppm | At 100 ppm After 15 days contact with NaOH | 100 ppm | | | Biodegradability according to OECD Screening Test [II] |
| 13 + 15 | 7 | Bu Cl | 3,5 | 66,5 | 70,5 | 88,5 | 87 | 80 | 74,5 | | |
| 13 + 15 | 9 | Bu Cl | 10 | — | 65 | 87,5 | 83,5 | 83,5 | — | | |
| 13 + 15 | 11 | Bu Cl | 21 | 71,5 | 64 | 93 | 89 | 89,5 | 76 | | 69 ± 5[I]  92[II] |
| 13 + 15 | 11 | iBu Cl | 40 | 78 | 47,5* | 61* | 64* | — | — | | |
| 13 + 15 | 11 | Bu Br | 19,5 | 75 | 54 | 74,5 | 80 | 81 | 58,5 | | |
| 13 + 15 | 20 | Bu Cl | 53,5 | 81 | 50* | 51* | 55* | — | — | | |
| 13 + 15 | 20 | He Cl | 23,5 | 74,5 | 83 | 93,5 | 95,5 | 85,5 | 78,5 | | |
| 13 + 15 | 20 | De Cl | 5 | 70 | 74,5* | 92,5 | 95,5 | 92 | 74,5 | | |
| 16 + 18 | 9 | Bu Cl | 5 | 70 | 65* | 66,5* | 64,5* | 83* | 78 | | |
| 16 + 18 | 11 | Bu Cl | 27 | 72 | 58,5* | 66,5* | 65* | — | — | | 61 ± 5[I] |
| 12 | 7,75 | Bu Cl | 11 | 70,5 | 52,5 | 71,5 | 77,5 | 87 | 87 | | |
| 12 | 7,75 | Bu⁼Cl | 43 | 85 | 34,5* | 23* | | — | — | | |
| 9 + 11 | 6 | Bu Cl | 5 | 66 | 56 | 66,5 | 64 | 77 | 51,5 | | |
| 9 + 11 | 8 | Bu Cl | 11 | 71,5 | 53 | 74 | 73,5 | 79,5 | 34,5 | | |
| 9 + 11 | 10 | Bu Cl | 16 | 72 | 61,5 | 81 | 86 | 87,5 | 25,5 | | |

* Apparatus overflows with foam I compound set solid, test not performed.

Bu Br means 1,4-dibromobutane
He Cl means 1,6-dichlorohexane
De Cl means 1,10-dichlorodecane
Bu=Cl means 1,4-dichlorobutene-2

The compounds in which n is shown as 13 + 15, 16 + 18 and 9 + 11 were mixtures of $C_{13}$ and $C_{15}$, $C_{16}$ and $C_{18}$ and $C_9$ and $C_{11}$ compounds respectively.

The domestic dishwashing test was carried out in a Miele G510 dishwasher fitted with a revolution counter for the spray arms.

The wash cycle was started at 15°C, the liquid being heated in the cycle to 60°C. The number of revolutions of the spray arms carried out per cycle with a test liquid was compared with the number using pure water and expressed as a percentage. The number of revolutions is a sensitive indication of the interference with the washing process caused by foam.

Test liquids were made up as follows,
0.15% anhydrous sodium metasilicate
0.13% anhydrous sodium tripolyphosphate
0.02% anhydrous sodium carbonate
0.013% anhydrous sodium sulphate
0.006% Potassium dichloroisocyanurate
0.035% whole egg powder

50 or 100ppm compound to be tested of formula $R(OC_2H_4)_m OCnH_{2n}X$ the balance being water. At the latter concentration fresh compound and compound which had been stored in contact with NaOH for 15 days was tested.

In the absence of the compound of formula $R(OC_2H_4)_m OCnH_{2n}X$ the test is impracticable because of foam.

The commercial dishwashing test is similar but using a Commenda industrial dishwasher and comparing rates or revolution of the spray arms using pure water and test solutions and expressing the rates with the latter as a percentage of those with water at 50°C.

The test solutions are of composition,
0.06% sodium metasilicate ($Na_2SiO_35H_2O$)
0.0012% sodium sulphate
0.028% $Na_2CO_3$
0.026% NaOH
0.079% sodium tripolyphosphate
0.0048% potassium dichloroisocyanurate
0.01% $R(OC_2H_4)_mC_nH_{2n}X$

The antifoaming efficiency on synthetic sugar beet juice is determined by making up a solution of 13 g/litre sucrose, $(NH_4)_2HPO_4$ (1g/litre), universal peptone (1g/litre) and saponine (1g/litre). This is then sprayed into a cylinder through a jet and the foam height produced after 1 minute recorded. $R(OC_2H_4)_n C_nH_{2n} X$ (27 ppm) was then added after the foam had decayed and the test repeated. The new foam height produced after 1 minute is expressed as a percentage of the first height. The antifoaming efficiency is 100 minus this percentage. The test is carried out at 75°C.

Biogradability was assessed in accordance with test NFT 73-270 of the Association Francaise de Normalisation and by the static test procedure (OECD Screening test) described in "Proposed Methods for the determination of biodegradability of surfactants used in synthetic detergents" (OECD, Paris, 1976).

Compounds of formula $C_nH_{2n+1} (C_2H_4O)_9 C_4H_8 Cl$ and $C_nH_{2n+1}(C_2H_4O)_{11} C_4H_8Cl$ in which n is 13 + 15 were shown to be metal degreasing agents by the following test.

Degreased polished iron plates (70 x 45 x 0.5 mm) were dipped in a soil of the following composition.
Stearic acid 15 g
Oleic acid 5 g
Groundnut oil 30 g
Motor engine lubricating oil (20/40) 25 g
Octadeconal 8 g

They were then soaked with agitation at temperatures of 60°C for 15 minutes in an aqueous solution of composition.
Compound above 3 g/l
$Na_2CO_3$ 20 g/l
sodium tripolyphosphate 10 g/l
sodium silicate 15 g/l
sodium gluconate 10g/l

The plates were then dried and tested for cleanliness by flowing water over them to see what extent it formed a continuous film.

## Claims

1. The use of a surface active compound of formula $R(OC_2H_4)_m O C_nH_{2n}X$ in which R is an alkyl group having 7 to 20 carbon atoms, m is 8 to 50, n is 3 to 8 and X is Br of Cl as a foam reducing agent, textile wetting agent or low foaming washing aid in an aqueous solution.

In a process which uses as a process fluid an aqueous solution which is subject to foaming, the step of incorporating in the said solution a surface active compound of formula
$R(OC_2H_4)_m O C_nH_{2n}X$
in which R is an alkyl group having 7 to 20 carbon atoms, m is 8 to 50, n is 3 to 8 and X is Br of Cl in a foam reducing amount.

3. A process as claimed in claim 2 which is a dishwashing process or hard surface degreasing process.

4. A composition for cleaning which comprises a surface active compound of formula
$R(OC_2H_4)_m O C_nH_{2n}X$
in which R is an alkyl group having 7 to 20 carbon atoms, m is 8 to 50, n is 3 to 8 and X is Br of Cl, an alkali and/or a builder.

5. A composition as claimed in claim 4 which comprises 5 to 50 parts by weight of sodium or potassium hydroxide or carbonate and 5 to 50 parts by weight of builder per part by weight of the surface active compound.

6. A composition as claimed in claim 4 or 5 which comprises an anti-corrosion agent in a ratio of one part by weight to 0.2 parts by weight per part by weight of alkali.

7. A composition as claimed in claim 4, 5 or 6 in which a bleach is present.

8. A composition as claimed in claim 4, 5, 6 or 7 in which a complexing agent is present.

9. A process of cleaning a solid object which comprises contacting it with an aqueous solution of a composition as claimed in any of claims 4 to 8 in which the surface active compound is in a concentration of 10 to 10,000 parts per million of the aqueous solution at a temperature of 30 to 100°C.

A process as claimed in claim 9 in which soil is removed from a hard surface by flowing the solution over it.

European Patent Office

# EUROPEAN SEARCH REPORT

Application Number

EP 88 30 0063

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 054 894 (HOECHST AG) <br> * page 21, example 6, claims 1-4 * <br> --- | 1,5,7 | C 11 D 3/24 <br> B 01 D 19/04 |
| A | DD-A- 156 947 (VEB CHEMIEKOMBINAT BITTERFELD) <br> * claim * <br> --- | 1 | |
| A | CHEMICAL ABSTRACTS, vol. 71, no. 2, 14th July 1969, page 109, abstract no. 4767u, Columbus, Ohio, US; UNILEVER N.V. "Detergent sudsing control" <br> --- | 1 | |
| D,A | PATENT ABSTRACTS OF JAPAN, vol. 9, no. 331 (C-321)[2054], 25th December 1985; & JP - A - 60 161 938 (MITSUI TOATSU) 23-08-1985 <br> ----- | | |
| | | | **TECHNICAL FIELDS SEARCHED (Int. Cl.4)** <br><br> C 11 D 3/00 <br> B 01 D 19/00 |

The present search report has been drawn up for all claims

| Place of search | Date of completion of the search | Examiner |
|---|---|---|
| BERLIN | 23-03-1988 | SCHULTZE D |

EPO FORM 1503 03.82 (P0401)